# EUROPEAN PATENT SPECIFICATION

(11) **EP 3 140 199 B1**
(45) Date of publication and mention of the grant of the patent: **25.07.2018**
(21) Application number: 15788840.5
(22) Date of filing: 06.05.2015
(51) Int. Cl.: B64D 37/32, B64D 37/06, B60K 15/03, F41H 5/04

(54) **BAFFLE**
ABLENKPLATTE
DÉFLECTEUR

(30) Priority: 07.05.2014 GB 201408023; 07.05.2014 EP 14275109
(43) Date of publication of application: 15.03.2017
(73) Proprietor: BAE Systems PLC, London SW1Y 5AD (GB)
(72) Inventor: BINGHAM, Christopher Steven, Preston Lancashire PR24 1AX (GB); IRWIN, Andrew James, Preston Lancashire PR24 1AX (GB); PEARSON, David Peter, Preston Lancashire PR4 1AX (GB)
(74) Representative: BAE SYSTEMS plc Group IP Department
(86) International application number: PCT/GB2015/051326
(87) International publication number: WO 2015/170093

(56) References cited:
- WO-A1-2012/173594
- KR-A- 20090 037 635
- US-A- 2 850 083
- US-A- 4 013 190
- US-A1- 2011 017 748

## Description

### FIELD OF THE INVENTION

The present invention relates to baffles for locating in tanks for containing liquid.

### BACKGROUND

A high speed projectile on impact with and penetration into a liquid containing tank generates very high pressure in the liquid. This phenomenon, known as hydrodynamic ram, typically includes the generation of shock waves and subsequent pressure pulses in the liquid. These pressures combined with the penetration damage from the projectile, can cause damage to the tank structure and frequently are the cause of catastrophic failure of the tank. The hydrodynamic ram pressure pulses are intense but of short duration which propagate through the liquid in the tank.

There is thus a need for means for reducing hydrodynamic ram pressure in the liquid in such a tank and for a generally improved tank which has an improved ability to sustain projectile impact without catastrophic failure.

US2011/017748 discloses a fuel storage tank for an automotive vehicle. The fuel storage tank holds a number of anti-slosh bodies which are made up of a main body with one or more holes therein.

KR2009 0037635 discloses a float in a fluid tank that works to reduce sloshing. The float is made up of a main body that has one or more sloshing reduction holes.

US4013190 discloses a flame arresting and explosion attenuating system, particularly for use in fuel tanks. The system is made up of a structural enclosure, partition means in said structural enclosure dividing the interior into a plurality of individual fuel cells, wherein the partition means has at least one transfer aperture between each pair of adjacent fuel cells to permit fluid communication therebetween.

### SUMMARY OF THE INVENTION

In a first aspect, the present invention provides a baffle for locating in a tank for containing liquid. The baffle comprises a baffle wall enclosing an internal cavity, and one or more openings in the baffle wall configured to permit the flow of a fluid between the internal cavity of the baffle and a volume external to the baffle wall. The baffle wall comprises a first portion providing an outer wall, and a second portion located within the first portion and providing an inner wall. The first portion comprises one or more openings. The second portion comprises one or more openings. The number of openings in the second portion are equal to the number of openings in the first portion. Each of the openings in the first portion is attached to a respective opening in the second portion via a respective opening side wall. The first and second portions are spaced apart to define therebetween a chamber.

The chamber may be a sealed chamber.

An outer surface defined by the first portion may be substantially spherical in shape.

The chamber may be filled with a compressible gas or gaseous mixture.

The baffle may be made of a material selected from the group of materials consisting of carbon fibre composite and plastic.

The baffle may have an external diameter less than or equal to 10cm.

In a further aspect, the present invention provides a liquid storage tank and baffle system comprising a tank for containing a liquid and enclosing a liquid storage space, and one or more baffles located within the liquid storage space. The one or more baffles are in accordance with any of the above aspects.

The one or more baffles may substantially fill the liquid storage space within the tank.

The total cavity volume of the baffles in the liquid storage space may be less than or equal to 15% by volume of the liquid storage space volume.

The tank may be an aircraft fuel tank.

In a further aspect, the present invention provides a vehicle (e.g. an aircraft) comprising a liquid storage tank and baffle system in accordance with any of the above aspects.

The present disclosure also presents an exemplary liquid storage tank and baffle system comprising a tank for containing a liquid, said tank enclosing a liquid storage space, and a plurality of baffles located within the liquid storage space. Each baffle comprises a baffle wall that encloses a respective internal cavity. Each baffle further comprises one or more openings in the baffle wall of that baffle such that a fluid may flow between the internal cavity of that baffle and the liquid storage space.

An outer surface defined by the baffle wall may be substantially spherical in shape (i.e. the baffles may be "baffle balls").

A baffle wall may comprise a first portion providing an outer wall, and a second portion located within the first portion and providing an inner wall. The first portion may comprise one or more openings. The second portion may comprise one or more openings, the number of openings in the first portion being equal to the number of openings in the second portion. Each of the openings in the first portion may be attached to a respective opening in the second portion via a respective opening side wall. The first and second portions may be spaced apart to define therebetween at least one sealed chamber.

The first portion and the second portion may be sufficiently strong to resist at least the maximum & minimum hydrostatic pressure of a liquid in the tank. The at least one chamber may have a volume sufficient to allow a shock wave or waves in the liquid in the tank resulting from compression of the liquid by impact of a projectile on the tank and thus on the liquid to be reduced by expansion of the compressed liquid into the chamber.

The at least one chamber may contain a material having a density sufficiently different from the density of a liquid in the tank to provide substantially total reflection within the baffle of the shock wave or waves impinging on the baffle thereby to reduce the hydraulic ram pressure in the liquid.

The chamber may be filled with a compressible gas or gaseous mixture The baffles may be objects that have been produced using an Additive Manufacturing process.

Each baffle may comprise multiple component sections that have been produced and subsequently attached together.

Each baffle may be made of a material selected from the group of materials consisting of carbon fibre composite and plastic.

Each baffle may have an external diameter less than or equal to 10cm.

The baffles may substantially fill the liquid storage space within the tank.

The total cavity volume of the baffles in the liquid storage space may be less than or equal to 15% by volume of the liquid storage space volume.

The tank may be an aircraft fuel tank.

The present disclosure also provides a vehicle comprising an exemplary liquid storage tank and baffle system in accordance with the preceding paragraphs.

### BRIEF DESCRIPTION OF THE DRAWINGS

Figure 1 is a schematic illustration (not to scale) of an exploded view of an example aircraft wing in which an embodiment of a baffle according to the invention is implemented;
Figure 2 is a schematic illustration (not to scale) showing a cross section through a fuel tank in which an embodiment of a hydrodynamic ram reducing baffle is implemented;
Figure 3 is a schematic illustration (not to scale) showing an exemplary hydrodynamic ram reducing baffle;
Figure 4 is a schematic illustration (not to scale) illustrating effects of a projectile impacting with an external surface of the fuel tank of Figure 2; and
Figure 5 is a schematic illustration (not to scale) showing a cross section through a hydrodynamic ram reducing baffle according to an embodiment of the invention.

### DETAILED DESCRIPTION

In the following description, like reference numerals refer to like elements.

The following description is based in part on embodiments of the invention and should not be taken as limiting the invention with regard to alternative embodiments that are not explicitly described herein. Structural material types and methods of construction provided herein are examples only.

It will be appreciated that relative terms such as top and bottom, upper and lower, and so on, are used merely for ease of reference to the Figures, and these terms are not limiting as such, and any two differing directions or positions and so on may be implemented.

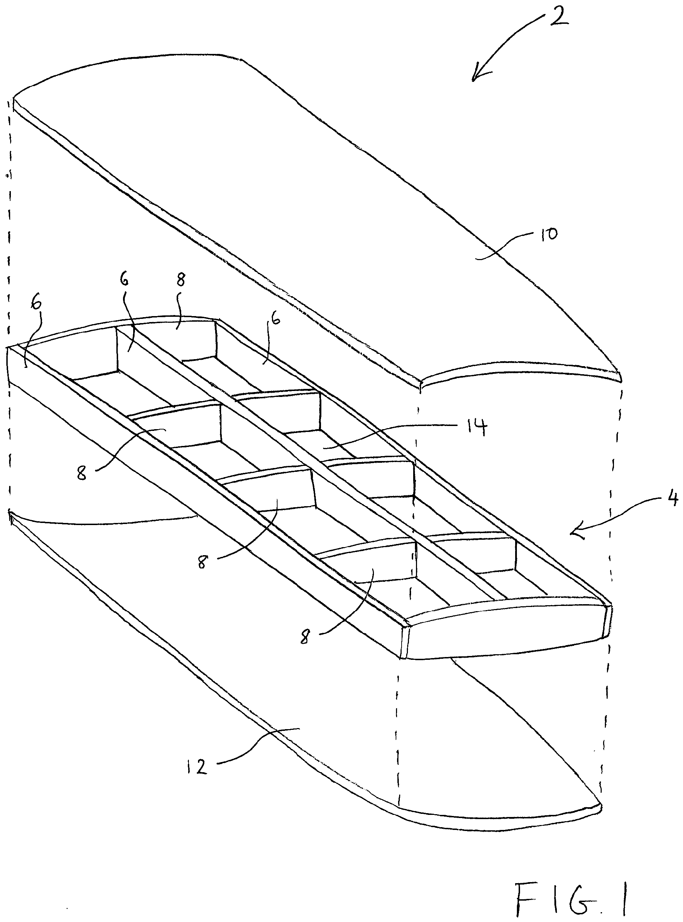

Figure 1 is a schematic illustration (not to scale) of an exploded view of an example aircraft wing 2 in which an embodiment of a hydrodynamic ram reducing baffle is implemented.

The aircraft wing 2 comprises a substructure 4 comprising a plurality of spars 6 and ribs 8. The spars 6 are spaced apart from one another and are aligned along the length of the aircraft wing 2. The spars 6 are coupled together by the spaced apart ribs 8 which are substantially perpendicular to the spars 6. The spars 6 and ribs 8 are connected together by fasteners (not shown in the Figures). The spars 6 and ribs 8 are made of carbon fibre composite (CFC) material, i.e. a composite material comprising a polymer matrix reinforced with carbon fibres. In other examples, the spars 6 and ribs 8 are made of a different appropriate material, for example, aluminium.

The aircraft wing 2 further comprises external skins, namely an upper skin 10 and a lower skin 12. The upper skin 10 comprises a plurality of panels made of CFC material. The upper skin 10 is attached to an upper surface of the substructure 4 by fasteners (not shown in the Figures). The lower skin 12 comprises a plurality of panels made of CFC material. The lower skin 12 is attached to a lower surface of the substructure 4 by fasteners (not shown in the Figures). The external skin 10, 12 may each be, for example, 8mm thick.

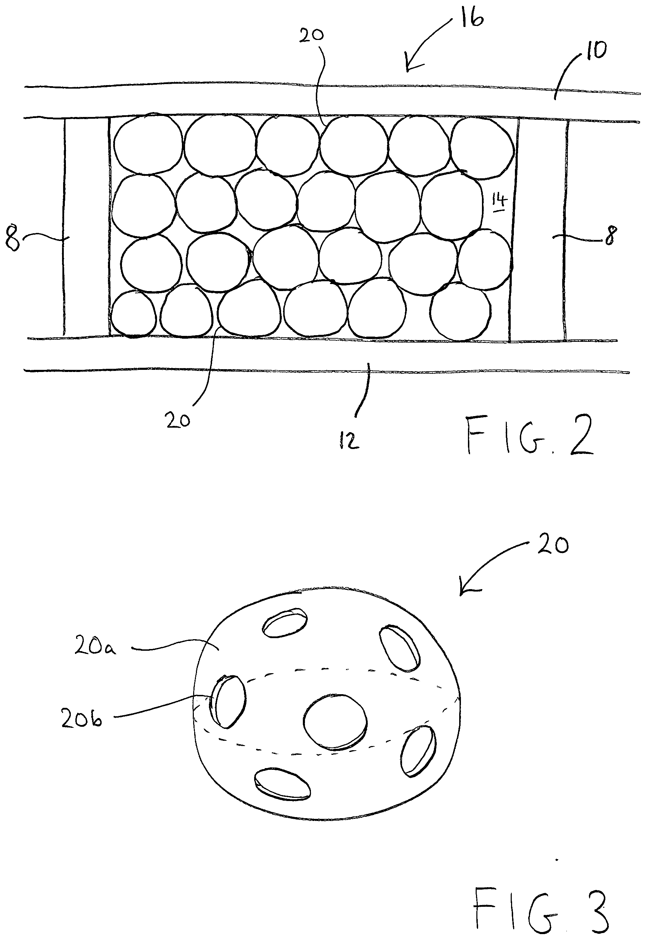

When the substructure 4 and the external skins 10, 12 are attached together (and, for example, bonded with a sealant), a cavity defined by the substructure 4 and skins 10, 12 is formed. Such a cavity is used as a fuel tank for storing aircraft fuel and is indicated in Figure 1 by the reference numeral 14. The fuel tank is described in more detail later below with reference to Figure 2.

The aircraft wing 2 further comprises a leading edge structure, a trailing edge structure and a wing tip structure, which are not shown in Figure 1 for reasons of clarity.

Figure 2 is a schematic illustration (not to scale) showing a cross section through the fuel tank 16 in the aircraft wing 2.

In this embodiment, the outer walls of the fuel tank 16 are provided by spars 6, ribs 8, and the upper and lower skins 10, 12. Aircraft fuel is stored in the cavity 14 defined by the fuel tank outer walls.

In this embodiment, the fuel tank 16 comprises hydrodynamic ram reducing baffles 20.

Figure 3 is a schematic illustration (not to scale) showing a perspective view of a baffle 20. Preferably, the baffles 20 are substantially identical to each other.

In this embodiment, each baffle 20 is a baffle ball being substantially spherical, although other shapes are within the disclosure of this invention.

Preferably, the outer diameter of each baffle 20 is less than 10cm. More preferably, the outer diameter of each baffle 20 is less than 5cm. More preferably, the outer diameter of each baffle 20 is between 3cm and 5cm e.g. 4cm.

In this embodiment, each baffle 20 is hollow and comprises an outer skin 20a enclosing an internal cavity.

In this embodiment, the outer skins 20a of the baffles 20 are relatively thin. For example, the thickness of the outer skin 20a may be less than 3mm. In other embodiments the thickness of the outer skin 20a is a different appropriate value. In some embodiments, the thickness of the outer skin 20a is between 0.25mm and 1 mm. In some embodiments, the thickness of the outer skin 20a is between 1 mm and 3mm. Preferably, the thicknesses of the outer skins 20a of the baffles 20 are such that the baffles 20 occupy less than 15% of the total internal volume (i.e. capacity) of the fuel tank 16. In other embodiments, the baffles 20 occupy a different proportion of the fuel tank capacity.

Each baffle 20 comprises a plurality of openings 20b in its outer skin 20a such that the internal cavity of the baffle 20 is in fluid communication with the volume outside the outer skin 20a of the baffle 20. Thus, the liquid in the fuel tank 16 tends to be able to move freely in and out of the baffles 20. Advantageously, the openings 20b tend not to detrimentally affect the structural integrity of the baffles 20 to a significant degree. In some embodiments, each baffle 20 includes eight openings 20b. However, in other embodiments, one or more of the baffles 20 include a different number of openings. In some embodiments, the diameter of each opening 20b is approximately 10%-20% of the outer diameter of the baffle 20, however openings having different diameters may be implemented.

In some embodiments, one or more of the baffles 20 comprise one or more support ribs integral with their internal or external surface to provide additional structural stability.

In this embodiment, the baffles 20 are made of a strong, tough, nonreactive material, for example CFC or a plastic such as high density polyethylene. Preferably, the baffles 20 are made of a material that is fuel resistant at high temperatures. In this embodiment, each baffle 20 is formed as a single integral unit. The baffles 20 may be produced using any appropriate process, such as moulding or an Additive Manufacturing process. However, in other embodiments, the baffles 20 are formed in multiple sections, e.g. as half-sphere shapes which may be subsequently joined together by any appropriate joining process.

In this embodiment, the baffles 20 are not fixedly attached together. In other words, the baffles 20 are arranged in the fuel tank 16 such that they may move, at least to some extent, with respect to one another. However, in other embodiments, the baffles 20 are attached to one another so that the relative positions of the baffles 20 are fixed.

In this embodiment, the baffles 20 are not fixedly attached to the spars 6. Thus, the baffles 20 are free to move, at least to some extent, within the fuel tank 16 relative to the spars 6. Also, in this embodiment, the baffles 20 are not fixedly attached to the ribs 8. Thus, the baffles 20 are free to move, at least to some extent, within the fuel tank 16 relative to the ribs 8. Also, in this embodiment, the baffles 20 are not fixedly attached to the upper skin 10. Thus, the baffles 20 are free to move, at least to some extent, within the fuel tank 16 relative to the upper skin 10. Also, in this embodiment, the baffles 20 are not fixedly attached to the lower skin 12. Thus, the baffles 20 are free to move, at least to some extent, within the fuel tank 16 relative to the lower skin 12.

Preferably, the number and arrangement of the baffles 20 within the fuel tank 16 is such that there is insufficient space in the fuel tank 16 in which to place a further baffle 20. In other words, preferably the fuel tank 16 is "filled" with baffles 20 so that a further baffle does not fit into the fuel tank 16. In other words, preferably the baffles 20 fill the entire liquid volume space in the fuel tank 16.

As will now be described in more detail, the baffles 20 are operable to reduce hydrodynamic ram pressure in the fuel contained within the fuel tank 16 resulting from impact of a projectile with an external surface of the fuel tank 16.

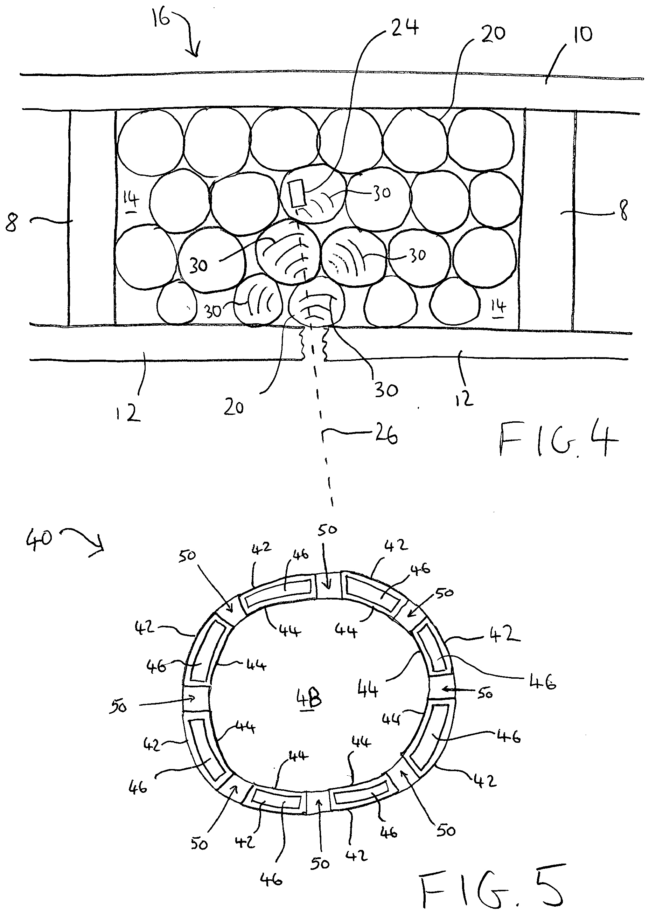

Figure 4 is a schematic illustration (not to scale) illustrating effects of a projectile 24 impacting with the lower skin 12 of the fuel tank 16. The path of the projectile through the lower skin 12 is indicated in Figure 3 by the reference numeral 26.

The projectile 24 may be any appropriate projectile or foreign object such as a bullet, warhead fragment, a vehicle part, a rock, a maintenance tool, hail, ice, a bolt, etc. An example projectile has a weight of approximately 3.5g, is substantially spherical in shape having a diameter of approximately 9.5mm, and travels with a velocity of 1500m/s. A further example projectile is a 44g 12.5mm bullet that travels with a velocity of 500m/s.

In this example, the projectile 24 initially impacts with an external surface of the lower skin 12 and travels through the lower skin 12. The projectile 24 causes high strain rate shear damage to the lower skin 12 resulting in a hole in the lower skin 12 approximately the size of the projectile 24.

In this example, after passing through the lower skin 12, the projectile 24 impacts with and travels through (i.e. pierces or penetrates) multiple baffles 20 (i.e. the outer skins 20a of multiple baffles 20). In other examples, the projectile 24 may impact with only a single baffle 20. In other examples, the projectile 24 does not pierce an outer skin 20a of a baffle 20 or only pierces a single outer skin 20a of a baffle 20.

The projectile impacting with a baffle 20 tends to cause that baffle 20 to deflect and accelerate within the fluid at least to some extent. Also, the projectile 24 impacting with a baffle 20 tends to cause that baffle 20 to move within the fluid in the fuel tank 16 with respect to the walls of the fuel tank 16. This in turn tends to cause deflection and/or movement of multiple other baffles 20 within the fuel tank 16, for example, due to the impinged upon baffle 20 being in contact with multiple other baffles 20. Thus, impact kinetic energy of the projectile 24 tends to be used to deflect and accelerate the baffles 20 through the fluid in the fuel tank 16, thereby reducing the energy introduced into the fluid.

Moving the baffles 20 through the fluid tends to provide that, in effect, the projectile 24 experiences a greater drag force when moving through the fluid in the fuel tank 16 compared to that that would be experienced were the baffles 20 not present. Thus, the passage of the projectile 24 through the fluid in the fuel tank 16 tends to be retarded. The retardation of the passage of the projectile 24 through the fluid tends to decrease the likelihood of the projectile 24 impacting with the upper skin 10. Thus, the likelihood of a hole being formed in the upper skin 10 tends to be reduced. Furthermore, the increase in drag on the projectile 24 tends to mean that a greater portion of the impact energy is absorbed by the fluid in the fuel tank 16. Thus, forces exerted on the walls of the fuel tank 16 tend to be reduced.

Also, in this example, when the projectile 24 travels through the outer skin 20a of a baffle 20, impact energy of the projectile 24 tends to be used to pierce that outer skin 20a. Thus, the energy introduced into the fluid by the projectile 24 tends to be reduced, and the passage of the projectile 24 into the fluid is retarded at least to some extent.

At least some of the impact energy of the projectile 24 tends to be absorbed by the baffles 20 and therefore not transferred to the aircraft substructure 4.

In this example, on piercing baffle outer skin 20a, the projectile 24 impacts with the fluid within that baffle 20, thereby generating one or more high pressure shock waves 30 within the fluid within that baffle 20. In this example, a respective shockwave 30 or set of shockwaves 30 may be generated within the fluid within each baffle 20 that is penetrated by the projectile 24. The outer skins 20a of the baffles 20 tend to reflect incident shock waves 30 at least to some extent. Also, the walls of the baffles 20 tend to be relatively poor transmitters of impinging shock waves 30. Thus, each baffle 20 tends to restrain or retain shockwaves 30 generated therein at least to some extent. Through multiple shockwave reflections in the fuel tank 16 and the attenuation properties of the liquid, the amplitude of the shock waves 30 tends to be reduced and consequently the pressure experienced by the substructure 4 tends to be diminished by the presence of the baffles 20.

Also, the shock waves 30 generated within the baffles 20 tend to be of lower energy than a shock wave or shock waves 30 experienced in a conventional system due to at least some of the impact energy of the projectile 24 being absorbed by the baffles 20. In addition, each baffle tends to limit the distance over which the shockwave 30 can develop. Furthermore, the baffles 20 tend to disrupt the shockwaves 30 travelling through the fluid in the fuel tank 16 and thereby tend to insulate the upper and lower skins 10, 12 at least to some extent. Thus, pressures resulting from the shock waves 30 exerted on the walls of the fuel tank 16 tend to be lower than the shock wave pressures experienced in conventional fuel tanks. Thus, the likelihood of damage to the walls of the fuel tank 16 (e.g. decoupling of the external skin 10, 12 from the spars 6 or ribs 8) tends to be reduced.

In this example, as the projectile 24 passes through the fluid in the fuel tank 16, a cavitation "wake" may form behind the projectile 24, i.e. a region of low pressure (e.g. a vapour or a vacuum) may form in the wake of the projectile 24. This causes a fluid displacement and an increase in the pressure of the fluid in the fuel tank 16. The baffles 20 tend to prevent or oppose the formation of a single large cavity in the wake of the projectile 24, i.e. the baffles 20 tend to disrupt cavity formation. Instead, multiple smaller cavities may be formed in the fluid within each of the baffles 20 through which the projectile 24 passes. Thus, the increased fluid pressure resulting from cavitation caused by the projectile 24 tends to be constrained within each baffle and decreased compared to conventional systems. This tends to be facilitated by the passage of the projectile 24 through the fuel tank 16 being retarded at least to some degree by the baffles 20. As a result, pressures resulting from cavitation exerted on the walls of the fuel tank 16 tend to be lower than in conventional systems. Consequently, the likelihood of damage to the walls of the fuels tank 16 (e.g. decoupling of the external skin 10, 12 from the spars 6 or ribs 8) tends to be reduced.

Advantageously, the baffles 20 are located in the fuel tank 16 so that a shock wave or waves 30 resulting from compression of the liquid in the tank resulting from impact of the projectile 24 on the external surface of the fuel tank 16 impinges on at least one of the baffles 20 and so that the shock wave or waves 30 interact with at least one baffle 20 before impinging on the tank external boundary surfaces.

An advantage provided by the above described baffle is that hydrodynamic ram damage to a fuel tank caused by an object impacting with an external surface of the fuel tank tends to be reduced or eliminated. Hydrodynamic pressures and their associated structural responses tend to be reduced or eliminated. Thus, the likelihood of catastrophic failure of the fuel tank structure and corresponding aircraft loss tends to be reduced or eliminated.

The above described baffle advantageously tends to be relative easy and cheap to manufacture.

The above described baffle tends to be relatively easy to retrofit to existing aircraft fuel tanks.

The above described baffle tends to provide protection against hydrodynamic ram damage whilst occupying a relatively small amount of the fuel tank's capacity.

The above described baffle tends to be relatively lightweight so as not to be a significant burden to the aircraft.

In the above embodiments, the baffles are implemented in an aircraft wing fuel tank. However, in other embodiments, the baffles are used in a different type of container for containing fluid. In some embodiment, one or more walls of the container may be made of a different material to that described above.

In the above embodiments, the outer skins of the baffles are a single relatively thin layer of material. However, in other embodiments, the outer skins of the baffles are of a different construction, for example, as will now be described.

Figure 5 is a schematic illustration (not to scale) showing a cross section through a hydrodynamic reducing baffle, hereinafter referred to as the "further baffle") and indicated by the reference numeral 40.

The outer skin of the further baffle 40 comprises an outer wall 42 and an inner wall 44 which are spaced apart to define therebetween at least one sealed chamber 46. The outer skin of the further baffle 40 encloses an internal cavity 48. The outer skin of the further baffle 40 comprises a plurality of openings 50 therethrough such that the internal cavity 48 of the further baffle 40 is in fluid communication with the volume outside the outer skin of the further baffle 40. Thus, the liquid in the fuel tank 16 tends to be able to move freely in and out of the baffles 20.

The outer wall 42 may be substantially spherical in shape having a substantially circular cross section and within which is located the inner wall 44 and the chamber 46. In other alternative embodiments the cross section may be an alternative shape.

, The inner wall 44 may be substantially spherical in shape having a substantially circular cross section. In other alternative embodiments the cross section may be an alternative shape.

The inner wall 44 is located within the outer wall 42. The outer wall 42 and the inner wall 44 are connected together at the openings 50 by opening walls.
the, or each, chamber 46 may contain a compressible gas or gaseous mixture such as air at reduced, atmospheric, or enhanced pressure. In some embodiments, the, or each chamber, 46 contains a different material, such as a liquid or a solid instead of or in addition to the compressible gas or gaseous mixture. For example, in some embodiments, the, or each, chamber 46 contains a compressible or crushable foam.

The external diameter of the further baffle 40 may be the same as that of the baffle 20 which is described in more detail above with reference to Figures 2 and 3.

The material from which the outer and inner walls 42, 44 of the further baffle 40 are made may be the same as that from which the outer skin 20a of the baffle 20 is made.

The arrangement of the further baffles 40 within the fuel tank 16 may be the same as that of the baffles 20, which are described in more detail above with reference to Figures 2 to 4.

The walls 42, 44 of the further baffles 40 may be sufficiently strong to withstand the pressure of the gas or gaseous material contained in the chamber 46 and are spaced apart in each further baffle 40 by an amount sufficient to provide at least one chamber 46 with a volume sufficient to allow a shock wave or waves in the liquid in the fuel tank 16, resulting from compression of the liquid by impact of a projectile on the tank external surface and thus in the liquid, to be reduced by expansion of the compressed liquid into the chamber volume, thereby to reduce the hydraulic ram pressure in the liquid in the fuel tank 16. Additionally, the gas or gaseous mixture in the or each chamber 46 has a density sufficiently different from the density of the liquid in the fuel tank 16 to provide substantially total reflection within the further baffle 40 of the shock wave or waves impinging on that further baffle 40 thereby to reduce the hydraulic ram pressure in the liquid in the fuel tank 16.

Additionally, the walls 42, 44 of the further baffles 40 are sufficiently strong to withstand the maximum and minimum hydrostatic pressure of the liquid in the fuel tank 16 at least up to maximum aircraft manoeuvre rate.

The further baffles 40 are placed in the fuel tank 16 such that a shock pulse generated by a projectile impacting the tank walls will impinge on at least one further baffle 40 before impinging upon an opposing tank wall. In defeating the hydraulic ram pressure the further baffles 40 serve at least two functions. Firstly energy from the hydraulic ram shock wave tends to be absorbed by expansion of the liquid into the space created by irreversible or reversible compression of the further baffle 40, i.e. movement of the outer wall 42 and/or the inner wall 44 of a further baffle 40 into the chamber 46 of that further baffle 40. Secondly, each further baffle 40 due to the large shock impedance mismatch between the further baffle 40 and the liquid in the fuel tank 16 behaves as a good shock wave reflector and a poor shock wave transmitter. Through multiple shock wave reflections in the fuel tank 16 and the attenuation properties of the liquid, the shock wave amplitude is reduced and consequently the pressure experienced by the substructure 4 is diminished.

The further baffle 40 may be formed as a single integral unit. The further baffle 20 may be produced using any appropriate process. For example, an Additive Manufacturing (AM) process (also known as Additive Layer Manufacture (ALM), 3D printing, etc.) may be used. Certain AM processes, such as Laser Blown Powder and Laser Wire Feed process, tends to be particularly well suited for the production of relatively complex objects such as the "double-skinned" further baffle 40. Typically, such processes include providing material (e.g. plastic) in the form of a powder or a wire and using a powerful heat source such as a laser beam, Electron Beam (EB) or an electric or plasma welding arc, to melt an amount of that material and deposit the melted material as a bead (e.g. on a base plate of a work piece). Subsequent layers/beads are then built up upon preceding layers/beads.

However, in other embodiments, the further baffles 40 are formed in multiple sections, e.g. as half-sphere shapes which may be subsequently joined together by any appropriate joining process. The multiple sections may be produced using any appropriate process. For example, an AM process (such as a Laser Powder Bed process) or a moulding process may be used.

An advantage provided by the "double-skinned" further baffles 40 is that the further baffles 40 tend to be equally compressible by shock waves impinging on the further baffles 40 from different directions. This tends to be at least partially due to the spherical symmetry of the further baffles 40. In other words, the further baffles 40 being substantially spherical in shape and exhibiting spherical symmetry tend to provide that the further baffles 40 are equally compressible from all directions. Thus, the further baffles 40 tend to be equally effective irrespective of the shock wave direction, i.e. irrespective of which surface of the fuel tank 16 is impacted by the projectile 24.

In the above embodiments, the baffles are implemented in an aircraft wing fuel tank. However, in other embodiments, the baffles are used in a different type of container for containing fluid. In some embodiments, one or more walls of the container may be made of a different material to that described above.

## Claims

1. A baffle (40) for locating in a tank (16) for containing liquid, the baffle (40) comprising:
a baffle wall enclosing an internal cavity (48); and
one or more openings (50) in the baffle wall configured to permit the flow of a fluid between the internal cavity (48) of the baffle (40) and a volume external to the baffle wall; **characterised in that**;
the baffle wall comprises:
a first portion (42) providing an outer wall; and
a second portion (44) located within the first portion and providing an inner wall;
the first portion (42) comprises one or more openings;
the second portion (44) comprises one or more openings, the number of openings in the second portion (44) being equal to the number of openings in the first portion (42);
each of the openings in the first portion (42) is attached to a respective opening in the second portion (44) via a respective opening side wall; and
the first and second portions (42, 44) are spaced apart to define therebetween a chamber (46).

2. A baffle (40) according to claim 1, wherein the chamber (46) is a sealed chamber (46).

3. A baffle (40) according to claim 1 or 2, wherein an outer surface defined by the first portion (42) is substantially spherical in shape.

4. A baffle (40) according to any of claims 1 to 3, wherein the chamber (46) is filled with a compressible gas or gaseous mixture

5. A baffle (40) according to any of claims 1 to 4, wherein the baffle (40) is made of a material selected from the group of materials consisting of carbon fibre composite and plastic.

6. A baffle (40) according to any of claims 1 to 5, wherein the baffle (40) has an external diameter less than or equal to 10cm.

7. A liquid storage tank (16) and baffle system comprising:
a tank (16) for containing a liquid, said tank (16) enclosing a liquid storage space (14); and
one or more baffles (40) located within the liquid storage space (14), the one or more baffles (40) being in accordance with any of claims 1 to 6.

8. A system according to claim 7, wherein the one or more baffles (40) substantially fill the liquid storage space (14) within the tank (16).

9. A system according to claim 7 or 8, wherein the total cavity volume of the baffles (40) in the liquid storage space (14) is less than or equal to 15% by volume of the liquid storage space volume.

10. A system according to any of claims 7 to 9, wherein the tank (16) is an aircraft fuel tank.

11. A vehicle comprising a liquid storage tank and baffle system in accordance with any of claims 7 to 10.

## Patentansprüche

1. Ablenkplatte (40) zum Anordnen in einem Tank (16) zum Speichern von Flüssigkeit, wobei die Ablenkplatte (40) umfasst:
eine Ablenkplattenwand, die einen inneren Hohlraum (48) umschließt; und
eine oder mehrere Öffnungen (50) in der Ablenkplattenwand, die konfiguriert sind, um die Strömung eines Fluids zwischen dem inneren Hohlraum (48) der Ablenkplatte (40) und einem Volumen, das sich außerhalb der Ablenkplattenwand befindet, zu ermöglichen; **dadurch gekennzeichnet, dass**;
die Ablenkplattenwand umfasst:
einen ersten Abschnitt (42), der eine äußere Wand bereitstellt; und
einen zweiten Abschnitt (44), der innerhalb des ersten Abschnitts angeordnet ist und eine innere Wand bereitstellt;
der erste Abschnitt (42) eine oder mehrere Öffnungen umfasst;
der zweite Abschnitt (44) eine oder mehrere Öffnungen umfasst, wobei die Anzahl der Öffnungen in dem zweiten Abschnitt (44) gleich der Anzahl der Öffnungen in dem ersten Abschnitt (42) ist;
jede der Öffnungen in dem ersten Abschnitt (42) an einer jeweiligen Öffnung in dem zweiten Abschnitt (44) über eine jeweilige Öffnungsseitenwand befestigt ist; und
der erste und der zweite Abschnitt (42, 44) voneinander beabstandet angeordnet sind, um dazwischen eine Kammer (46) zu definieren.

2. Ablenkplatte (40) nach Anspruch 1, wobei die Kammer (46) eine abgedichtete Kammer (46) ist.

3. Ablenkplatte (40) nach Anspruch 1 oder 2, wobei eine äußere Oberfläche, die durch den ersten Abschnitt (42) definiert ist, in ihrer Gestalt im Wesentlichen kugelförmig ist.

4. Ablenkplatte (40) nach einem der Ansprüche 1 bis 3, wobei die Kammer (46) mit einem zusammendrückbaren Gas oder Gasmischung gefüllt ist.

5. Ablenkplatte (40) nach einem der Ansprüche 1 bis 4, wobei die Ablenkplatte (40) aus einem Material hergestellt ist, das aus der Gruppe von Materialien, die aus Kohlenstofffaserverbund und Kunststoff bestehen, ausgewählt ist.

6. Ablenkplatte (40) nach einem der Ansprüche 1 bis 5, wobei die Ablenkplatte (40) einen Außendurchmesser aufweist, der gleich oder kleiner als 10 cm beträgt.

7. Flüssigkeitsspeichertank- (16) und Ablenkplattensystem, das umfasst:
einen Tank (16) zum Speichern einer Flüssigkeit, wobei der Tank (16) einen Flüssigkeitsspeicherraum (14) umschließt; und
eine oder mehrere Ablenkplatten (40), die innerhalb des Flüssigkeitsspeicherraums (14) angeordnet sind, wobei die eine oder die mehreren Ablenkplatten (40) solche nach einem der Ansprüche 1 bis 6 sind.

8. System nach Anspruch 7, wobei die eine oder die mehreren Ablenkplatten (40) im Wesentlichen den Flüssigkeitsspeicherraum (14) innerhalb des Tanks (16) ausfüllen.

9. System nach Anspruch 7 oder 8, wobei das gesamte Hohlraumvolumen der Ablenkplatten (40) in dem Flüssigkeitsspeicherraum (14) gleich oder kleiner als 15 Vol.% des Volumens des Flüssigkeitsspeicherraums beträgt.

10. System nach einem der Ansprüche 7 bis 9, wobei der Tank (16) ein Kraftstofftank eines Flugzeugs ist.

11. Fahrzeug, das ein Flüssigkeitsspeichertank- und Ablenkplattensystem nach einem der Ansprüche 7 bis 10 umfasst.

## Revendications

1. Chicane (40) à placer dans un réservoir (16) pour contenir du liquide, la chicane (40) comprenant :
une paroi de chicane entourant une cavité interne (48) ; et
une ou plusieurs ouvertures (50) dans la paroi de chicane configurées pour permettre l'écoulement d'un fluide entre la cavité interne (48) de la chicane (40) et un volume à l'extérieur de la paroi de chicane, **caractérisée en ce que** :
la paroi de chicane comprend :
une première partie (42) assurant une paroi extérieure ; et
une seconde partie (44) située à l'intérieur de la première partie et assurant une paroi intérieure ;
la première partie (42) comprend une ou plusieurs ouvertures ;
la seconde partie (44) comprend une ou plusieurs ouvertures, le nombre d'ouvertures dans la seconde partie (44) étant égal au nombre d'ouvertures dans la première partie (42) ;
chacune des ouvertures dans la première partie (42) est fixée à une ouverture respective dans la seconde partie (44) par le biais d'une paroi latérale correspondante d'ouverture ; et
les première et seconde parties (42, 44) sont séparées pour délimiter entre elles une chambre (46).

2. Chicane (40) selon la revendication 1, dans laquelle la chambre (46) est une chambre (46) fermée hermétiquement.

3. Chicane (40) selon la revendication 1 ou 2, dans laquelle la surface extérieure définie par la première partie (42) est de forme sensiblement sphérique.

4. Chicane (40) selon l'une quelconque des revendications 1 à 3, dans laquelle la chambre (46) est remplie d'un gaz ou d'un mélange gazeux compressible.

5. Chicane (40) selon l'une quelconque des revendications 1 à 4, dans laquelle la chicane (40) est faite d'une matière choisie dans le groupe de matières constitué d'un composite de fibres de carbone et d'un plastique.

6. Chicane (40) selon l'une quelconque des revendications 1 à 5, dans laquelle la chicane (40) a un diamètre extérieur inférieur ou égal à 10 cm.

7. Système de réservoir (16) de stockage de liquide et de chicanes comprenant :
un réservoir (16) pour contenir un liquide, ledit réservoir (16) entourant un espace (14) de stockage de liquide ; et
une ou plusieurs chicanes (40) situées dans l'espace (14) de stockage de liquide, la ou les chicanes (40) étant conformes à l'une quelconque des revendications 1 à 6.

8. Système selon la revendication 7, dans lequel la ou les chicanes (40) remplissent sensiblement l'espace (14) de stockage de liquide dans le réservoir (16).

9. Système selon la revendication 7 ou 8, dans lequel le volume total de cavités des chicanes (40) dans l'espace (14) de stockage de liquide est inférieur ou égal à 15% en volume du volume de l'espace de stockage de liquide.

10. Système selon l'une quelconque des revendications 7 à 9, dans lequel le réservoir (16) est un réservoir de carburant d'aéronef.

11. Véhicule comprenant un système de réservoir de stockage de liquide et de chicanes conforme à l'une quelconque des revendications 7 à 10.
